# EUROPÄISCHE PATENTANMELDUNG

(11) **EP 4 729 912 A1**
(43) Veröffentlichungstag der Anmeldung: **22.04.2026**
(21) Anmeldenummer: 25208763.0
(22) Anmeldetag: 15.10.2025
(51) Int. Cl.: G01M 3/22, G01M 3/32

(54) **WASSERSTOFFTANK-TESTEINRICHTUNG UND VERFAHREN ZUM TESTEN EINES KRYOGENEN WASSERSTOFFTANKS**

(30) Priorität: 18.10.2024 DE 102024130323
(71) Anmelder: Deutsches Zentrum für Luft- und Raumfahrt e.V., 53227 Bonn (DE)
(72) Erfinder: Kleineberg, Markus, 38108 Braunschweig (DE); Hilmer, Philipp, 38108 Braunschweig (DE); van de Kamp, Bram, 38108 Braunschweig (DE); Ropte, Sven, 38108 Braunschweig (DE)
(74) Vertreter: REHBERG HÜPPE + PARTNER

(57) **Zusammenfassung**

Die Erfindung betrifft eine Wasserstofftank-Testeinrichtung (1), die zum Testen eines kryogenen Wasserstofftanks dient. Die Wasserstofftank-Testeinrichtung (1) weist einen Grundkörper (7) und eine Halterung (15) auf. Über die Halterung (15) kann ein Wasserstofftank-Teilabschnitt (2), insbesondere eine Wasserstofftankhälfte, im Bereich einer Öffnung (40) unter Abdichtung an dem Grundkörper (7) gehalten werden. Erfindungsgemäß erstreckt sich im Inneren des an dem Grundkörper (7) gehaltenen Wasserstofftank-Teilabschnitts (2) ein Füllkörper (26). Auf diese Weise kann das Volumen im Inneren des Wasserstofftank-Teilabschnitts (2), welches mit dem Testfluid gefüllt werden muss, reduziert werden, was vorteilhaft hinsichtlich der Kosten und der gespeicherten Energie in dem Testfluid bei einem Bersten des Wasserstofftank-Teilabschnitts (2) ist. Die Erfindung betrifft auch ein Verfahren zum Testen eines kryogenen Wasserstofftanks unter Verwendung einer derartigen Wasserstofftank-Testeinrichtung (1).

## Beschreibung

### TECHNISCHES GEBIET DER ERFINDUNG

Die Erfindung betrifft eine Wasserstofftank-Testeinrichtung sowie ein Verfahren zum Testen eines kryogenen Wasserstofftanks, die insbesondere Einsatz finden, um unter kryogenen Umgebungsbedingungen einen kryogenen Wasserstofftank einem Test hinsichtlich der Dichtigkeit und/oder strukturmechanischer Eigenschaften (insbesondere Steifigkeiten, Festigkeiten, Dehnungen und/oder Mikrorissbildungen) (insbesondere mit einem Bersttest) zu unterziehen, wobei eine Beanspruchung des Wasserstofftanks mit einem unter Druck stehenden Testfluid, einem Unterdruck und/oder dem Umgebungsdruck und/oder mit statischen Beanspruchungen, dynamischen Beanspruchungen und/oder einer stoßartigen Beanspruchung erfolgen kann.

### STAND DER TECHNIK

Für einen Test eines Wasserstofftanks kann der Wasserstofftank mit einem inkompressiblen Fluid, insbesondere Wasser, gefüllt werden. Die Verwendung eines derartigen inkompressiblen Fluids hat den Vorteil, dass die Bereitstellung dieses Fluids kostengünstig sein kann und das inkompressible Fluid in einem Berstfall nur wenig Energie freisetzt. Für kryogene Wasserstofftanks ist allerdings ein Test bei sehr niedrigen Temperaturen erforderlich. Wird als Fluid Wasser verwendet, muss dem Wasser ein Frostschutzmittel verwendet werden, womit allerdings lediglich ein Test bei Temperaturen erfolgen kann, die mindestens -50 °C oder -40 °C betragen. In einem Wasserstofftank für flüssigen Wasserstoff sind während des Tests unter betriebsnahen Testbedingungen so niedrige Temperaturen erforderlich, dass kein derartiges Fluid eingesetzt werden kann. Vielmehr findet dann als Testfluid ein Gas oder ein unter Druck flüssig gehaltenes Fluid (insbesondere Stickstoff, Helium oder Wasserstoff) Einsatz. Drucktests, mechanische Tests und Bersttests von Wasserstofftanks bei kryogenen Temperaturen sind mit einem hohen Aufwand verbunden einerseits für die Gewährleistung der Kühlung des Gesamtsystems. Des Weiteren sind aufwändige Vorkehrungen zu treffen, um der hohen freigesetzten Energie bei einem Bersten Rechnung zu tragen. Auch für einen Nachweis der Dichtigkeit eines kryogenen Wasserstofftanks müssen die Wasserstofftanks mit dem Testfluid unter entsprechenden realitätsnahen Testbedingungen (insbesondere Druck und Temperatur) getestet werden. Häufig wird aus Gründen der Sicherheit, technischen Vorteilen oder aufgrund wirtschaftlicher Überlegungen ein vom späteren Einsatz abweichendes Testgas (insbesondere Helium statt Wasserstoff oder Helium statt Ammoniak) verwendet. Die daraus resultierenden Ergebnisse liefern über eine Umrechnung näherungsweise Ergebnisse, die aufwändig für den jeweiligen Anwendungsfalls validiert werden müssen. Erfolgt die Bedruckung des Wasserstofftanks mit einem Testfluid in Form eines kompressiblen Gases, wird der Wasserstofftank zu einem Energiespeicher, der bei einem Versagen oder Bersten die (mechanische und ggf. auch chemische) Energie schlagartig freisetzt. Das verwendete Gas, beispielsweise Helium, kann zu erhöhten Kosten für die Durchführung der Tests führen. Schließlich kann das Testgas (beispielsweise Wasserstoff) die Gefahr einer möglichen Entzündung mit sich bringen.

Hintergrund zum Stand der Technik zu kryogenen Wasserstofftanks, die beispielsweise aus einem Verbundmaterial, kohlenstoff-faserverstärktem Polymer (CFRP) oder mit vertikal ausgerichteten Carbo-Nanotubes (VACNT) hergestellt sind, ist der Website
https://www.ulprospector.com/knowledge/14395/pe-advanced-composites-for-cryogenichydrogen-storage/
   zu entnehmen (vgl. auch
https://www.nccuk.com/news/ncc-announces-major-milestone-in-uk-based-compositecryogenic-hydrogen-programme-to-accelerate-uk-capability/
https://hydrogen-central.com/composite-cryogenic-tanks-tested-with-liquid-hydrogen-bynational-composites-centre-jec/
https://ntrs.nasa.gov/api/citations/20140016807/downloads/20140016807.pdf.

Einen Überblick über den Einsatz von karbonfaser-verstärkten Verbundmaterialien in kryogenen Wasserstofftanks gibt
Hongfei Zheng, Xuesen Zeng, Jianbao Zhang and Hongjie Sun: "The Application of Carbon Fiber Composites in Cryotank" veröffentlicht am 14.03.2018 (DOI: 10.5772/intechopen.73127); https://www.intechopen.com/chapters/58970.

In dem Artikel
https://link.springer.com/article/10.1007/s10443-024-10219-y
wird beschrieben, dass ein kryogener Wasserstofftank aus Endkappen aus Titan sowie einem hohlzylindrischen Zwischenabschnitt aus einem Verbundmaterial mit einem nassen gewickelten Filament ohne Liner hergestellt wird. Dieser Wasserstofftank wird dann durch Füllen des Wasserstofftanks mit Stickstoff mit einem Druck von 4 bar und anschließendem Entleeren in 20 Zyklen hinsichtlich der mechanischen Festigkeit und einer Leckage getestet. Anschließend wird der Wasserstofftank mit einem Druck von 30 bar zum Bersten gebracht wird.

Weiterer Stand der Technik ist aus DE 10 2019 127 728 A1 und CN 118 654 817 A1 bekannt.

### AUFGABE DER ERFINDUNG

Der vorliegenden Erfindung liegt die Aufgabe zugrunde, eine Wasserstofftank-Testeinrichtung sowie ein Verfahren zum Testen eines kryogenen Wasserstofftanks vorzuschlagen, bei welcher oder welchem ein Test insbesondere der mechanischen Festigkeit und/oder der Dichtigkeit bspw. mit
- einem verringerten Aufwand,
- einem verringerten Gefahrenpotential und/oder
- verringerten Kosten
möglich ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird eine Wasserstofftank-Testeinrichtung zum Testen eines kryogenen Wasserstofftanks vorgeschlagen, die einen (ein- oder mehrteiligen) Grundkörper und eine Halterung aufweist. Die Halterung ist eingerichtet dafür, einen Wasserstofftank-Teilabschnitt im Bereich einer Öffnung des Wasserstofftank-Teilabschnitts an dem Grundkörper zu halten, wobei eine Abdichtung des Wasserstofftank-Teilabschnitts im Umgebungsbereich der Öffnung und der Halterung sowie im Kontaktbereich des Wasserstofftank-Teilabschnitts mit dem Grundkörper gewährleistet wird. Erfindungsgemäß ist somit die Wasserstofftank-Testeinrichtung nicht für den Test des gesamten Wasserstofftanks eingerichtet, sondern lediglich für einen Wasserstofftank-Teilabschnitt.

Hierbei kann der Wasserstofftank-Teilabschnitt eine beliebige Geometrie aufweisen. Beispielsweise kann es sich um eine Wasserstofftank-Hälfte handeln, wobei möglich ist, dass der Wasserstofftank dom- oder kuppelförmig ist oder einer hohlen Halbkugel entspricht. Um lediglich ein weiteres, die Erfindung nicht beschränkendes Beispiel zu nennen, kann der Wasserstofftank-Teilabschnitt auch aus einer insbesondere dom- oder kuppelförmigen Endkappe sowie einem daran anschließenden Hohlzylinderabschnitt bestehen.

Die von dem Wasserstofftank-Teilabschnitt begrenzte Öffnung kann eine beliebige Geometrie aufweisen, wobei die Öffnung vorzugsweise kreisförmig ist.

Erfindungsgemäß wird vorgeschlagen, dass die Wasserstofftank-Testeinrichtung über einen Füllkörper verfügt. Ist der Wasserstofftank-Teilabschnitt mit der Halterung an dem Grundkörper der Wasserstofftank-Testeinrichtung gehalten, erstreckt sich der Füllkörper im Inneren des Wasserstofftank-Teilabschnitts. Während gemäß dem Stand der Technik der Wasserstofftank vollständig mit dem Testfluid gefüllt werden muss, so dass ein großes Volumen des Testfluids in den Wasserstofftank eingebracht wird, ist erfindungsgemäß lediglich die Befüllung mit einem reduzierten Teilvolumen erforderlich, welches dem Volumen des Zwischenraums zwischen dem Füllkörper und dem Wasserstofftank-Teilabschnitt entspricht. Auf diese Weise kann eine schnellere Befüllung mit dem Testfluid gewährleistet werden und angesichts des reduzierten Volumens eine Reduktion der Kosten für das Testfluid herbeigeführt werden. Kommt es zu einem Bersten des Wasserstofftank-Teilabschnitts, ist angesichts des verringerten Volumens des unter Druck stehenden Testfluids in dem Zwischenraum die gespeicherte Energie erfindungsgemäß verringert, womit sich eine erhöhte Sicherheit ergibt und unter Umständen auch die Sicherheitsanforderungen gesenkt werden können. Ist das Testfluid entzündlich, kann die Menge des entzündlichen Fluids durch die erfindungsgemäßen Maßnahmen reduziert werden.

Für die Geometrie des Füllkörpers und die Abstimmung desselben an den Wasserstofftank-Teilabschnitt und insbesondere den Innenraum des Wasserstofftank-Teilabschnitts, gibt es im Rahmen der Erfindung vielfältige Möglichkeiten. Vorzugsweise füllt der Füllkörper mindestens 50 %, mindestens 60 %, mindestens 70 %, mindestens 80 %, mindestens 90 %, mindestens 95 % oder sogar mindestens 98 % des Innenraums des Wasserstofftank-Teilabschnitts aus. Zumindest in einem Längsbereich des Wasserstofftank-Teilabschnitts entspricht die Querschnittsgeometrie des Füllkörpers der Innenkontur des Wasserstofftank-Teilabschnitts. Vorzugsweise ist der sich zwischen Füllkörper und Wasserstofftank-Teilabschnitt ausgebildete Zwischenraum in der Art eines in Umfangsrichtung umlaufenden Spalts und/oder eines entlang der domförmigen Außengeometrie oder in Längsrichtung durchgehenden Spalts ausgebildet, wobei die Spalthöhe vorzugsweise kleiner ist als 30 cm, kleiner ist als 25 cm, kleiner ist als 20 cm, kleiner ist als 15 cm, kleiner ist als 10 cm, kleiner ist als 5 cm, kleiner ist als 3 cm, kleiner ist als 2 cm, kleiner ist als 15 mm oder sogar kleiner ist als 10 mm. Die Spalthöhe ist größer zu wählen, wenn bei dem Test auch Systemkomponenten des Wasserstofftank-Teilabschnittes vorhanden sind und mit getestet werden sollen.

Durchaus möglich ist, dass der Grundkörper einstückig den Füllkörper ausbildet. Für einen weiteren Vorschlag der Erfindung ist der Füllkörper separat von dem Grundkörper ausgebildet. Der Grundkörper ist dann an dem Füllkörper befestigt. Möglich ist für diese Ausführungsform, dass dieselbe Wasserstofftank-Testeinrichtung verwendet werden kann für Wasserstofftank-Teilabschnitte, die unterschiedliche Geometrien aufweisen, wobei dann für die unterschiedlichen Geometrien der Wasserstofftank-Teilabschnitte Füllkörper mit unterschiedlichen, entsprechend den jeweiligen Wasserstofftank-Teilabschnitten angepassten Geometrien ausgestattet sind. So können beispielsweise Füllkörper mit unterschiedlichen Durchmessern, Krümmungsradien und Krümmungsverläufen der domförmigen Endbereiche, unterschiedlichen Längen des Hohlzylinderbereiche und/oder grundsätzlich unterschiedlichen Geometrien (zylindrische Füllkörper für Wasserstofftank-Zwischenabschnitte sowie halbkugelförmige oder halbdomförmige Füllkörper für Endkappen des Wasserstofftank-Teilabschnitts) verwendet werden.

Für den Fall, dass ein Wärmeübergang zwischen dem Grundkörper und dem Füllkörper reduziert werden soll, kann gemäß einem Vorschlag der Erfindung zwischen dem Grundkörper und dem Füllkörper ein Dämmkörper angeordnet sein.

Im Rahmen der Erfindung kann der Grundkörper der Wasserstofftank-Testeinrichtung weiteren Zwecken dienen:
Der Grundkörper kann (mindestens) einen Anschluss aufweisen. Der Anschluss kann beispielsweise fluidisch mit einem Zwischenraum zwischen dem Füllkörper und dem an dem Grundkörper gehaltenen Wasserstofftank-Teilabschnitt verbunden sein, sodass möglich ist, dass über den Anschluss der Zwischenraum mit dem Testgas gefüllt werden kann. Möglich ist, dass der Anschluss als Einlass oder als Auslass für ein für den Betrieb der Wasserstofftank-Testeinrichtung benötigtes Fluid dient. Möglich ist aber auch, dass es sich um einen elektrischen Anschluss handelt. Beispielsweise kann über den Anschluss eine Leistungsversorgung eines Sensors erfolgen und/oder ein Messsignal von der Wasserstofftank-Testeinrichtung, insbesondere für eine Temperatur, einen Druck, einen Volumenstrom, einen Leckagestrom, einen Füllstand, eine mechanische Spannung oder mechanische Dehnung (beispielsweise gemessen mittels eines DMS, der an der Wandung des Wasserstofftank-Teilabschnittes befestigt ist), übertragen werden. Möglich ist auch, dass der Anschluss der Zuführung eines elektrischen oder pneumatischen Steuersignals für einen elektrischen oder pneumatischen Steueranschluss einer Ventileinrichtung der Wasserstofftank-Testeinrichtung dient.

Alternativ oder kumulativ möglich ist, dass der Grundkörper (mindestens) eine Messeinrichtung aufweist, beispielsweise mit einem Sensor für eine Temperatur, einen Druck, einen Volumenstrom, einen Leckagestrom, einen Füllstand, eine mechanische Beanspruchung u. ä.

Alternativ oder kumulativ möglich ist, dass der Grundkörper (mindestens) eine Ventileinrichtung mit mindestens einem Ventil aufweist. Mittels der Ventileinrichtung kann die Steuerung oder Regelung fluidischer Beaufschlagungen der Wasserstofftank-Testeinrichtung erfolgen. Beispielsweise kann über die Ventileinrichtung die Befüllung des Zwischenraums zwischen dem Füllkörper und dem Wasserstofftank-Teilabschnitt hinsichtlich des Drucks und/oder des Volumenstroms gesteuert oder geregelt werden.

Für einen weiteren Vorschlag ist in den Füllkörper eine Kühleinrichtung integriert, mittels welcher die kryogenen Temperaturen erzeugt werden, indem der Füllkörper abgekühlt wird. Über die Mantelfläche des Füllkörpers kann dann das Testfluid in dem Zwischenraum zwischen dem Füllkörper und dem Wasserstofftank-Teilabschnitt gekühlt werden. In diesem Fall kann die Kühleinrichtung durch den Grundkörper hindurch und über entsprechende Anschlüsse des Grundkörpers sowie eine etwaige in den Grundkörper integrierte Ventileinrichtung mit dem Kühlfluid versorgt werden und es kann eine elektronische Ansteuerung einer etwaigen Ventileinrichtung des Grundkörpers zur Steuerung der kühlenden fluidischen Ströme erfolgen.

Für die Ausgestaltung der Kühleinrichtung gibt es im Rahmen der Erfindung vielfältige Möglichkeiten. Für einen Vorschlag der Erfindung ist die Kühleinrichtung als Sprühkühlung ausgebildet. In diesem Fall wird die Kühleinrichtung (vorzugsweise von einem Anschluss des Grundkörpers und durch eine fluidische Leitung oder einen Kanal durch den Grundkörper hindurch) mit einem flüssigen Kühlfluid versorgt. Das Kühlfluid wird dann aus einer Mündung (insbesondere eine Austrittsöffnung oder Düse) mindestens eines Sprühkanals der Kühleinrichtung ausgesprüht auf die Innenfläche des Füllkörpers. Unter Aufnahme von Wärme von dem Kühlkörper und hierüber wiederum von dem Testfluid in dem Zwischenraum zwischen Füllkörper und Wasserstofftank-Teilabschnitt verdampft das Kühlfluid. Das verdampfte Kühlfluid kann dann über entsprechende Abführleitungen oder Abführkanäle, Ventileinrichtungen und Anschlüsse (insbesondere des Grundkörpers) aus dem Füllkörper abgeführt werden.

Für eine Ausgestaltung der Wasserstofftank-Testeinrichtung verfügt der Füllkörper über einen Fortsatz. Durch den Fortsatz erstreckt sich mindestens eine elektrische und/oder fluidische Leitung. Dieser Fortsatz kann als eine Art Turm oder Hülse ausgebildet sein, wobei dann im Inneren des Turms oder der Hülse die elektrische und/oder die fluidische Leitung verläuft. Der Fortsatz erstreckt sich dann mit der mindestens einen Leitung in dessen Inneren durch den Grundkörper hindurch. Möglich ist, dass der Grundkörper eine zentrale Bohrung aufweist, durch die sich (vorzugsweise unter Abdichtung) der Fortsatz mit der mindestens einen Leitung hindurch erstreckt. Möglich ist, dass sich durch den Fortsatz ein Leitungsbündel oder Leitungsstrang mit mehreren elektrischen und/oder fluidischen Leitungen erstreckt. In dem außenliegenden Endbereich können die Leitungen dann geeignete Anschlüsse aufweisen, wobei auch ein gemeinsamer Stecker mit mehreren elektrischen und/oder fluidischen Leitern verwendet werden kann.

Für die Art der in der Wasserstofftank-Testeinrichtung verwendeten Halterung für den Wasserstofftank-Teilabschnitt gibt es im Rahmen vielfältige Möglichkeiten. Für einen Vorschlag ist die Halterung eine radiale Klemmvorrichtung. Möglich ist beispielsweise, dass der Grundkörper der Wasserstofftank-Testeinrichtung einen in die Öffnung des Wasserstofftank-Teilabschnitts hineinragenden Fortsatz oder eine äußere zylindrische Mantelfläche aufweist, auf den oder die ein endseitiger Halterungsabschnitt des Wasserstofftank-Teilabschnitt aufgeschoben werden kann. Über eine Klemmschelle oder radiale Klemmelemente der Halterung kann dann der Halterungsabschnitt radial nach innen gepresst werden, sodass sich ein flächiger, abdichtender und reibschlüssig haltender Kontakt zwischen dem Halterungsabschnitt und dem Fortsatz oder der zylindrischen Mantelfläche ergibt. Möglich ist, dass in diesen Kontakt auch Dichtelemente integriert sind oder der Fortsatz oder die zylindrische Außenfläche eine dichtende und die Reibung gewährleistende Beschichtung aufweist. Möglich ist auch, dass zusätzlich zu der radialen Klemmvorrichtung eine axiale Sicherung über einen Formschluss, beispielsweise mit einem Verrasten eines Innenwulstes der Innenfläche des Wasserstofftank-Endabschnitts mit einer Nut des Fortsatzes oder der Außenfläche (oder umgekehrt), erfolgt. Möglich ist auch, dass eine umlaufende oder mindestens eine sich in einem Teilumfangsbereich erstreckende keilförmige Aufdickung zur Krafteinleitung an der Innen- oder Außenfläche des Wasserstofftank-Endabschnitts vorgesehen ist, die mit einem keilförmigen Gegenstück (Ring oder Keil) an dem Grundkörper oder Fortsatz gehalten wird. Die radiale Klemmeinrichtung kann beispielsweise die radiale Klemmkraft durch ein axiales Verspannen eines Spannringkeil der Halterung gegenüber einem Keilabschnitt des Halterungsabschnittes erzeugen, wobei zusätzlich zu einer sichernden Reibkraft auch ein axiale Formschluss erzeugt wird.

Dient die Wasserstofftank-Testeinrichtung zumindest auch einer Dichtigkeitsprüfung, kann die Wasserstofftank-Testeinrichtung eine Messeinrichtung aufweisen, die einen Leckagestrom im Bereich der Halterung misst. Möglich ist beispielsweise, dass zwischen dem Halterungsabschnitt und dem Fortsatz oder der Außenfläche axial hintereinanderliegend mehrere in Umfangsnuten angeordnete Dichtungen angeordnet sind, zwischen denen Dichtkammern gebildet sind. Eine vorzugsweise außenliegende Dichtkammer kann dann mit einer Unterdruckquelle verbunden sein, wobei die Messeinrichtung dann einen Leckagestrom zwischen der Dichtkammer und der Unterdruckquelle messen kann, der Aufschluss gibt über die Dichtigkeit im Kontaktbereich des Halterungsabschnitts mit dem Fortsatz oder der Außenfläche. Wird auch Volumenstrom für die Aufrechterhaltung des Drucks des Testfluids in dem Zwischenraum zwischen dem Füllkörper und Wasserstofftank-Teilabschnitt gemessen, kann aus der Differenz des Volumenstroms und des Leckagestroms unabhängig von einer etwaigen Undichtigkeit der Verbindung im Bereich der Halterung auf die Dichtigkeit des Wasserstofftank-Teilabschnitts rückgeschlossen werden. Möglich ist auch, dass ohne Nachführung des Testfluids der Druckabfall in dem Zwischenraum über die Zeit gemessen wird und aus diesem Druckabfall eine Messgröße für die Dichtigkeit des Wasserstofftank-Teilabschnitts abgeleitet wird, wobei hierbei auch der Leckagestrom berücksichtigt wird.

Im Rahmen der Erfindung möglich ist, dass lediglich ein Test eines Wasserstofftank-Teilabschnitts pro Testdurchführung erfolgt. Üblich sind aber durchaus Wasserstofftankeinrichtungen, bei denen der Wasserstofftank von einem Wasserstoffaußentank umgeben ist. In diesem Fall dient der Wasserstofftank der Aufnahme des unter Druck stehenden Wasserstoffs, während der Zwischenraum zwischen dem Wasserstofftank und dem Wasserstoffaußentank evakuiert wird, womit der Wasserstofftank mit einem größeren Druck auf der Innenseite als auf Außenseite beansprucht wird. Hingegen wird der Wasserstoffaußentank mit einem Außendruck, insbesondere dem Umgebungsdruck, beaufschlagt, der größer ist als der Innendruck, also der Druck in dem evakuierten Zwischenraum zwischen dem Wasserstofftank und dem Wasserstoffaußentank. Der Wasserstoffaußentank dient bspw. der Gewährleistung der mechanischen Festigkeit der Wasserstofftankeinrichtung und/oder der Gewährleistung einer Vakuumisolation (mit möglicherweise in den Zwischenraum integriertem MLI (Multilayerlnsulation) oder isolierendem Füllmaterial). Auch möglich ist, dass äußere Lasten (insbesondere Beschleunigungen) von dem Wasserstoffaußentank verteilt, flächig und/oder umverteilt an den Wasserstofftank übertragen werden.

Für derartige Konstellationen schlägt die Erfindung vor, dass bei einem Test gemeinsam mit dem Wasserstofftank-Teilabschnitt auch der zugeordnete Wasserstoffaußentank-Teilabschnitt getestet wird. In diesem Fall ist die Wasserstofftank-Testeinrichtung mit einer weiteren Halterung ausgestattet. Mittels der weiteren Halterung ist dann der Wasserstoffaußentank-Teilabschnitt unter Abdichtung an dem Grundkörper gehalten. Der Wasserstofftank-Teilabschnitt ist dann im Inneren des Wasserstoffaußentank-Teilabschnitts so angeordnet, wie dies bei dem späteren bestimmungsgemäßen Betrieb der Wasserstofftankeinrichtung der Fall ist. Die Wasserstofftank-Testeinrichtung kann in diesem Fall einen realitätsnahen Test der Wasserstofftankeinrichtung durchführen, wobei gegenüber den realen Betriebsbedingungen lediglich verändert ist, dass lediglich ein Teilabschnitt, insbesondere eine Hälfte, getestet wird.

Für diese Ausgestaltung kann der Grundkörper einen Anschluss für eine Unterdruckquelle aufweisen. Der Anschluss ist dann fluidisch mit einem Zwischenraum zwischen dem Wasserstofftank-Teilabschnitt und dem Wasserstoffaußentank-Teilabschnitt verbunden. Auf diese Weise kann somit eine Evakuierung des Zwischenraums zwischen dem Wasserstofftank-Teilabschnitt und dem Wasserstoffaußentank-Teilabschnitt erfolgen.

Eine weitere Lösung der der Erfindung zugrunde liegenden Aufgabe stellt ein Verfahren zum Testen eines kryogenen Wasserstofftanks dar. Bei einem derartigen Verfahren wird ein Wasserstofftank-Teilabschnitt mit der Gewährleistung einer Abdichtung mittels einer Halterung mit einem Grundkörper einer Wasserstofftank-Testeinrichtung (insbesondere einer Wasserstofftank-Testeinrichtung, wie diese zuvor erläutert worden ist) verbunden. Hierbei wird ein Füllkörper derart im Inneren des Wasserstofftank-Teilabschnitts angeordnet, dass zwischen dem Füllkörper und dem Wasserstofftank-Teilabschnitt ein Zwischenraum ausgebildet wird. Der Zwischenraum wird dann mit einem Testfluid gefüllt und druckbeaufschlagt.

Vor dem Verbinden des Wasserstofftank-Teilabschnitts mit dem Grundkörper der Wasserstofftank-Testeinrichtung und dem Anordnen des Füllkörpers im Inneren des Wasserstofftank-Teilabschnitts wird der separat von dem Grundkörper ausgebildete Füllkörper an dem Grundkörper montiert, wobei eine spezifische Auswahl eines für den jeweiligen Typ des Wasserstofftank-Teilabschnitts geeigneten Füllkörpers erfolgen kann.

Bei der Montage der Wasserstofftank-Testeinrichtung kann zwischen dem Grundkörper und dem Füllköper ein Dämmkörper angeordnet werden, welcher einen Wärmeaustausch zwischen dem Grundkörper und dem Füllkörper reduziert.

In dem erfindungsgemäßen Verfahren wird über einen Anschluss des Grundkörpers ein Fluid (insbesondere das Testfluid und/oder ein Kühlfluid) übertragen. Alternativ oder kumulativ kann über einen Anschluss des Grundkörpers ein elektrisches Signal (insbesondere ein Leistungsversorgungssignal oder ein Messsignal) übertragen werden. Möglich ist auch, dass über eine Messeinrichtung, die in den Grundkörper integriert ist oder an diesem angebracht ist, ein Messsignal erzeugt wird. Schließlich ist auch möglich, dass eine fluidische Beaufschlagung (insbesondere mit dem Testfluid und/oder dem Kühlfluid) mittels einer Ventileinrichtung gesteuert wird, die Bestandteil des Grundkörpers ist.

In dem erfindungsgemäßen Verfahren kann der Füllkörper und das den Füllkörper umgebende Fluid über eine in den Füllkörper integrierte Kühleinrichtung gekühlt werden.

Hierbei kann die Kühleinrichtung als Sprühkühlung ausgebildet sein, bei der eine Innenfläche des Füllkörpers mit einem flüssigen Kühlmittel beaufschlagt wird und unter Verdampfung des Kühlmittels Wärme von dem Kühlmittel aufgenommen wird.

Möglich ist, dass sich mindestens eine elektrische und/oder fluidische Leitung durch einen Fortsatz des Füllkörpers und mit dem Fortsatz durch den Grundkörper erstreckt.

In einem erfindungsgemäßen Verfahren wird der Wasserstofftank-Teilabschnitt mittels der Halterung mit dem Grundkörper radial verklemmt.

Gemäß einem Vorschlag ist eine Messeinrichtung vorhanden, die einen Leckagestrom im Bereich der Halterung (insbesondere im Bereich einer Dichtkammer zwischen Dichtelementen, die zwischen einer Innenfläche eines Haltungsabschnitts und einem Fortsatz oder eine Außenfläche des Grundkörpers angeordnet sind) misst.

Erfindungsgemäß kann auch ein abdichtendes Verbinden eines Wasserstoffaußentank-Teilabschnitts mit einer weiteren Halterung mit dem Grundkörper erfolgen. In diesem Fall wird der Wasserstofftank-Teilabschnitt derart im Inneren des Wasserstoffaußentank-Teilabschnitts angeordnet, dass zwischen dem Wasserstofftank-Teilabschnitt und dem Wasserstoffaußentank-Teilabschnitt ein Zwischenraum ausgebildet wird. Der Zwischenraum wird dann mit einer Unterdruckquelle verbunden und entlüftet.

Möglich ist für eine Ausgestaltung des Verfahrens, dass für die Verbindung des Wasserstofftank-Teilabschnitts (oder des Wasserstoffaußentank-Teilabschnitts) mit der Halterung (oder der weiteren Halterung) ein Halterungsabschnitt des Wasserstofftank-Teilabschnitts (oder des Wasserstoffaußentank-Teilabschnitts) verwendet wird, über den für die Bildung des Wasserstofftanks (oder des Wasserstoffaußentanks) der Wasserstofftank-Teilabschnitt (oder Wasserstoffaußentank-Teilabschnitt) mit einem anderen Teilabschnitt des Wasserstofftanks (oder des Wasserstoffaußentanks) verbunden wird. Dieser Halterungsabschnitt, der ohnehin für die erforderlichen Kräfte und auch eine Abdichtung gestaltet sein kann, ist in diesem Fall multifunktional genutzt wird, indem dieser einerseits in der Wasserstofftank-Testeinrichtung genutzt wird und andererseits auch für den eigentlichen Betrieb des Wasserstofftanks genutzt wird. Möglicherweise kann dann sogar dieser Halterungsabschnitt durch die Wasserstofftank-Testeinrichtung einem Test hinsichtlich der Dichtigkeit und/oder Festigkeit unterzogen werden.

Für eine alternative Ausgestaltung des Verfahrens wird nach der Durchführung des Tests mit der Wasserstofftank-Testeinrichtung ein Halterungsabschnitt des Wasserstofftank-Teilabschnitts, im Bereich dessen eine Verbindung mittels der Halterung erfolgt ist, entfernt. Soll dann der um den Halterungsabschnitt reduzierte Wasserstofftank-Teilabschnitt mit mindestens einem weiteren Teilabschnitt zu einem Wasserstofftank ergänzt werden, wird für die Verbindung ein zusätzlicher Verbindungsabschnitt des Wasserstofftank-Teilabschnitts verwendet, der auch nach der Beseitigung des Halterungsabschnitts noch vorhanden ist. Das Entsprechende kann für einen Halterungsabschnitt des Wasserstoffaußentank-Teilabschnitts gelten.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisiert eine Wasserstofftank-Testeinrichtung in einem Längsschnitt.
- **Fig. 2**: zeigt ein Detail II im Bereich einer Halterung in Ausgestaltung als Klemmvorrichtung für das Halten eines Wasserstofftank-Teilabschnitts an einem Grundkörper (wobei hier einzelne Details von der Ausgestaltung gemäß Fig. 1 abweichen).

### FIGURENBESCHREIBUNG

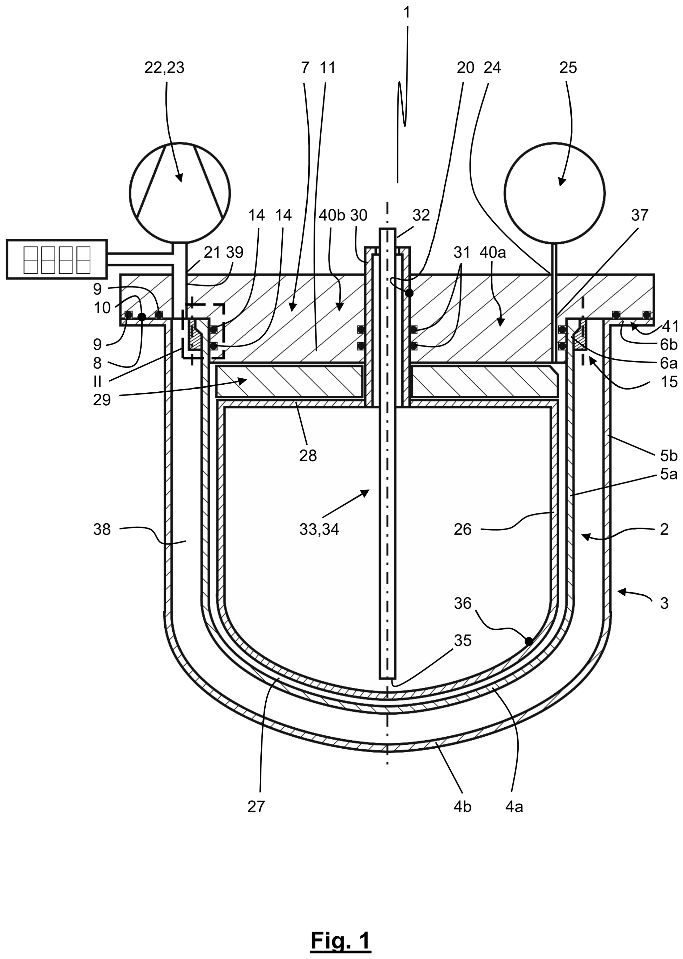

**Fig. 1** zeigt eine Wasserstofftank-Testeinrichtung 1 für einen Test eines Wasserstofftank-Teilabschnitts 2 und eines Wasserstoffaußentank-Teilabschnitts 3 hinsichtlich der Dichtigkeit und/oder strukturmechanischer Eigenschaften (insbesondere Steifigkeiten, Festigkeiten, Dehnungen und/oder Mikrorissbildungen) (insbesondere mit einem Bersttest).

Bei dem Wasserstofftank-Teilabschnitt 2 und dem Wasserstoffaußentank-Teilabschnitt 3 sind Bauelemente oder funktionale Bereiche, die sich hinsichtlich der Geometrie und/oder Funktion entsprechen oder ähneln, teilweise mit denselben Ziffern der Bezugszeichen gekennzeichnet, wobei dann für den Wasserstofftank-Teilabschnitt 2 der Buchstabe a) ergänzt ist, während für den Wasserstoffaußentank-Teilabschnitt 3 der Buchstabe b) ergänzt ist.

Der Wasserstofftank-Teilabschnitt 2 und der Wasserstoffaußentank-Teilabschnitt 3 verfügen jeweils über kuppel-, hohlkreis- oder domförmige Endkappen 4a, 4b sowie hieran ohne Sprung oder Knick und ohne Änderung der Wandstärke anschließende Hohlzylinderbereiche 5a, 5b. In den den Endkappen 4a, 4b abgewandten Endbereichen enden die Hohlzylinderbereiche 5a, 5b jeweils in einem Halterungsabschnitt 6a, 6b.

Möglich ist, dass der Wasserstofftank-Teilabschnitt 2 eine Wasserstofftank-Hälfte ist, welche mit einer entsprechenden weiteren Wasserstofftank-Hälfte zu einem Wasserstofftank ergänzt werden kann, wobei dann möglicherweise auch eine Verbindung der beiden Wasserstofftank-Hälften über die Halterungsabschnitte 6a erfolgt. Entsprechend kann der Wasserstoffaußentank-Teilabschnitt 3 eine Wasserstoffaußentank-Hälfte sein, die mit einer entsprechenden Wasserstoffaußentank-Hälfte einen Wasserstoffaußentank bildet, in dem der Wasserstofftank angeordnet sein kann. Hierbei ist der Wasserstofftank zur Aufnahme des Wasserstoffs bestimmt, während der Wasserstoffaußentank zur Bereitstellung eines Unterdrucks oder Vakuums im Bereich der Außenfläche des Wasserstofftanks und zur Gewährleistung bspw. der mechanischen Festigkeit der Wasserstofftankeinrichtung und/oder der Gewährleistung einer Vakuumisolation (mit möglicherweise in den Zwischenraum integriertem MLI (Multilayerlnsulation) oder isolierendem Füllmaterial) dient. Auch möglich ist, dass äußere Lasten (insbesondere Beschleunigungen) von dem Wasserstoffaußentank verteilt, flächig und/oder umverteilt an den Wasserstofftank übertragen werden.

Die Wasserstofftank-Testeinrichtung 1 weist einen Grundkörper 7 auf. Der Grundkörper verfügt über eine kreisringförmige Kontaktfläche 8. In die Kontaktfläche 8 sind konzentrische Dichtnuten eingebracht, in denen zwei radial ineinander geschachtelte Dichtelemente 9 aufgenommen sind. An der Kontaktfläche 8 des Grundkörpers 7 liegt der Halterungsabschnitt 6b des Wasserstoffaußentank-Teilabschnitts 3 mit einer Kontaktfläche 10 unter Überdeckung der beiden Dichtelemente 9 an. Zu diesem Zweck weist der Halterungsabschnitt 6b des Wasserstoffaußentank-Teilabschnitts 3 eine Abwinklung nach außen um 90° auf, die die kreisringförmige Kontaktfläche 10 ausbildet.

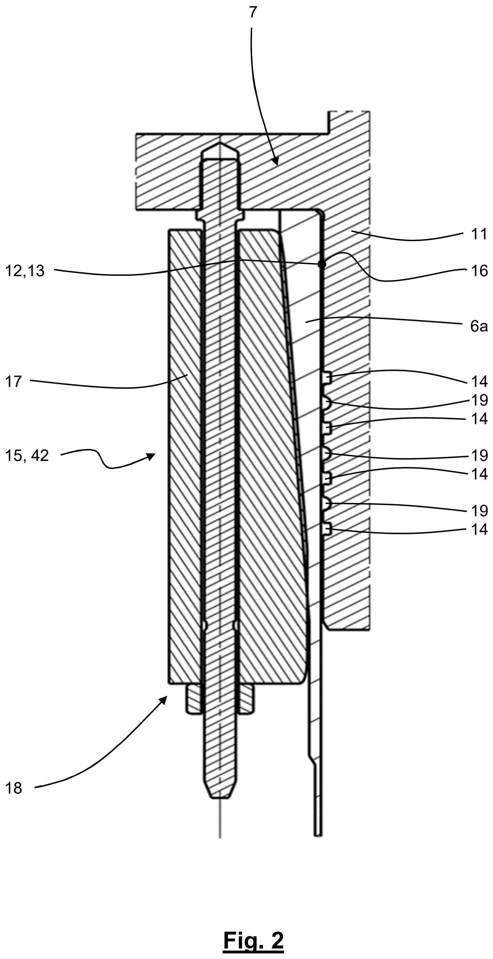

Radial innenliegend von den Kontaktflächen 8, 10 verfügt der Grundkörper 7 über einen Fortsatz 11, der eine zylindrische Außenfläche 12 bildet, die wiederum eine Kontaktfläche 13 für den Wasserstofftank-Teilabschnitt 2 bildet (vgl. Fig. 2). In die Kontaktfläche 13 sind umlaufende radiale Dichtnuten eingebracht, in die Dichtelemente 14 eingesetzt sind.

**Fig. 2** zeigt in einem Detail II eine Halterung 15, über die der Wasserstofftank-Teilabschnitt 2 im Bereich einer Kontaktfläche 16, die von einer Innenfläche des Halterungsabschnitts 6a gebildet ist, an der Kontaktfläche 13 des Fortsatzes 11 gehalten ist. Zu erkennen ist in dem Detail II gemäß Fig. 2, dass der Halterungsabschnitt 6a eine Wandungsstärke aufweist, die sich in Richtung des Endbereichs linear vergrößert, sodass der Halterungsabschnitt 6a in dem in Fig. 2 dargestellten Halbquerschnitt keilförmig ausgebildet ist. Die Halterung 15 weist in diesem Fall über den Umfang verteilte Keilelemente 17 auf, deren Innenfläche entsprechend dem Keilwinkel des Halterungsabschnitts 6a geneigt ist, oder ein als umlaufender Ring ausgebildetes Keilelement 17, wobei der Ring die beim Verspannen entstehenden Radialkräfte tragen kann

Das mindestens eine Keilelement 17 kann durch Betätigung einer Schraubverbindung 18 relativ gegenüber den keilförmigen Halterungsabschnitten 6a bewegt werden, ohne dass die radiale Position des mindestens einen Keilelements 17 verändert wird. Auf diese Weise kann eine Klemmwirkung derart erzeugt werden kann, dass die Halterungsabschnitte 6a des Wasserstofftank-Teilabschnitts 2 mit ihrer innenliegenden Kontaktfläche gegen die von der Außenfläche 12 des Fortsatzes 11 gebildete Kontaktfläche 13 gepresst wird, womit eine reib- und formschlüssige Verbindung geschaffen wird, über die der Wasserstofftank-Teilabschnitt 2 an dem Grundkörper 7 gesichert ist. Die Halterung 15 ist somit hier als radiale Klemmvorrichtung 42 ausgebildet.

Zu erkennen ist in Fig. 2, dass zwischen den Dichtelementen 14 Dichtkammern 19 gebildet sind, die auch als Absaugkanal oder Spülgaskanal genutzt sein können.

Der Grundkörper 7 verfügt über eine zentral angeordnete zylindrische Durchgangsausnehmung 20. Des Weiteren verfügt der Grundkörper 7 über einen Anschluss 21 für eine Unterdruckquelle 22, bei der es sich um eine Pumpe 23 handeln kann. Der Grundkörper 7 verfügt auch über einen Anschluss 24, über den die Wasserstofftank-Testeinrichtung 1 mit einer unter Druck stehenden Testfluidquelle 25 verbunden ist.

Im Inneren des Wasserstofftank-Teilabschnitts 2 ist ein Füllkörper 26, angeordnet. Die Außenkontur des Füllkörpers 26 ist an die Innenkontur des Wasserstofftank-Teilabschnitts 2 derart angepasst, dass sich zwischen dem Füllkörper 26 und dem Wasserstofftank-Teilabschnitt 2 ein durchgehender Zwischenraum 27 mit einer konstanten Zwischenraum- oder Spalthöhe ergibt.

Der Füllkörper 26 ist vorzugsweise als Hohlkörper ausgebildet, wobei der Füllkörper 26 abweichend zu der vereinfachten Darstellung in Fig. 1 zur Aufnahme der im Bereich seiner Mantelfläche wirkenden Druckkräfte innere Versteifungsstreben aufweisen kann. Auf der dem Grundkörper 7 zugewandten Seite weist der Füllkörper 26 eine kreisringförmige Stirnplatte 28 auf. Optional kann zwischen der Stirnplatte 28 und der entsprechend kreisringförmigen Stirnfläche des Grundkörpers 7 ein kreisringförmiger Dämmkörper 29 angeordnet sein.

Der Füllkörper 26 weist einen von der Stirnseite der Stirnplatte 28 ausgehenden hülsen- oder turmförmigen Fortsatz 30 auf, der sich durch die Innenbohrung des Dämmkörpers 29 und die Durchgangsausnehmung 20 des Grundkörpers 7 hindurch erstreckt. Über Dichtelemente 31 erfolgt eine Abdichtung zwischen der Außenfläche des Fortsatzes 30 und der Innenfläche der Durchgangsausnehmung 20. Der hohlzylindrische Fortsatz 30 erstreckt sich auf der dem Wasserstofftank-Teilabschnitt 2 abgewandten Seite aus dem Grundkörper 7 heraus.

Durch den Fortsatz 30 erstreckt sich (mit einer hier nicht dargestellten Abdichtung) eine Leitung 32. Beispielsweise kann es sich um die Leitung 32 einer Kühleinrichtung 33 handeln, die hier als Sprühkühlung 34 ausgebildet ist. Über die Sprühkühlung 34 wird im Bereich einer Mündung 35 ein gekühltes Kühlfluid ausgebracht derart, dass dieses gegen eine Innenfläche 36 des Wasserstofftank-Teilabschnitts 2 strömt oder diese benetzt. Das Kühlfluid kann dann infolge des Kontakts mit der Innenfläche 36 verdampfen und der Wandung des Wasserstofftank-Teilabschnitts 2 sowie dem Testfluid in dem Zwischenraum 27 Wärme entziehen. Das verdampfte Kühlfluid wird dann (auf hier nicht dargestellte Weise) aus dem Innenraum des Füllkörpers 26 entfernt.

In Fig. 1 ist vereinfacht lediglich eine Leitung 32 mit einer Mündung 35 dargestellt, über die das Kühlfluid in Richtung der Innenfläche 36 ausgebracht wird. Möglich ist, dass die Leitung 32 verzweigt und das Kühlfluid über mehrere über die Innenfläche 36 verteilt angeordnete Mündungen 35 ausgebracht wird.

Der Anschluss 24 ist durch einen Kanal 37 in dem Grundkörper 7 mit dem Zwischenraum 27 verbunden. Somit kann je nach Schaltstellung einer hier nicht dargestellten Ventileinrichtung zwischen dem Anschluss 24 und der Testfluidquelle 25 oder auch in dem Kanal 37 in dem Grundkörper 7 eine Druckbeaufschlagung des Zwischenraums 27 mit dem Testfluid und eine Druckregelung erfolgen.

Zwischen der Außenfläche des Wasserstofftank-Teilabschnitts 2 und der Innenfläche des Wasserstoffaußentank-Teilabschnitts 3 ist ein Zwischenraum 38 ausgebildet, der vorzugsweise eine konstante Zwischenraum- oder Spalthöhe aufweist, wobei die Zwischenraumhöhe des Zwischenraums 38 vorzugsweise größer ist als die Zwischenraumhöhe des Zwischenraums 27. Der Zwischenraum 38 ist über einen sich durch den Grundkörper 7 erstreckenden Kanal 39 mit dem Anschluss 21 (und hierüber mit der Unterdruckquelle 22) verbunden. Je nach Schaltstellung einer hier nicht dargestellten Ventileinrichtung, die in die Leitung zwischen dem Anschluss 21 und der Unterdruckquelle 22 oder in den Kanal 39 in dem Grundkörper 7 integriert sein kann, kann der Zwischenraum 38 entlüftet werden.

Abweichend zu dem dargestellten Ausführungsbeispiel kann sich durch den Fortsatz 30 nicht lediglich eine Leitung 32, sondern ein Leitungsbündel elektrischer und/oder fluidischer Leitungen erstrecken. So ist beispielsweise möglich, dass die Unterdruckquelle 22 nicht über den Anschluss 21 und den Kanal 39 mit dem Zwischenraum 38 verbunden ist, sondern über eine Leitung, die dann Teil des sich durch den Fortsatz 30 erstreckenden Leitungsbündels ist. Auch möglich ist, dass Leitungen Bestandteil eines sich durch den Fortsatz 30 erstreckenden Leitungsbündels sind, die der Leistungsversorgung und/oder der Durchleitung von Messsignalen eines Sensors (beispielsweise eines Temperatursensors, eines Füllstandsensors oder eines Drucksensors) dienen. Des Weiteren kann eine Auslassleitung für das Kühlfluid Bestandteil des Leitungsbündels sein. Möglich ist auch, dass anstelle der Zufuhr des Testgases über einen Anschluss 24 und einen Kanal 37 das Testfluid über eine fluidische Leitung des Leitungsbündels in dem Fortsatz 30 zu- und/oder abgeführt wird, wobei dann diese Leitung durch eine Öffnung der Wandung des Füllkörpers 26 mit dem Zwischenraum 27 verbunden sein kann.

Im Bodenbereich des Füllkörpers 26 kann ein Füllstandsensor angeordnet sein, der einen Pegelstand einer Flüssiglache des Kühlfluids, insbesondere des Stickstoffs, erfasst. In einem Sumpf im Inneren des Füllkörpers 26 kann dann eine Öffnung einer Auslassleitung angeordnet sein. Sensiert der Füllstandsensor, dass ein signifikanter Füllstand vorliegt, kann durch Betrieb einer geeigneten Fördereinrichtung die Flüssiglache in dem Sumpf über die Auslassleitung zumindest reduziert werden.

Ist eine Montage der Wasserstofftank-Testeinrichtung 1 mit dem Wasserstofftank-Teilabschnitt 2 und dem Wasserstoffaußentank-Teilabschnitt 3 gemäß Fig. 1 erfolgt, erfolgt für den Test ein Betrieb der Wasserstofftank-Testeinrichtung 1 wie folgt:

Der Zwischenraum 27 wird durch eine Verbindung desselben mit der Testfluidquelle 25 verbunden. Mittels Drucksensoren wird der Druck in dem Zwischenraum 27 erfasst. Über Ventileinrichtungen erfolgt eine Steuerung der Druckbeaufschlagung des Zwischenraums 27 derart, dass ein vorbestimmter Testdruck herbeigeführt wird.

Vor, gleichzeitig oder nach der Beaufschlagung des Zwischenraums 27 mit dem Testfluid erfolgt die Reduzierung des Drucks in dem Zwischenraum 38, indem dieser mit der Unterdruckquelle 22 verbunden wird. Über die Steuerung von Ventileinrichtungen in der Verbindung des Zwischenraums 38 mit der Unterdruckquelle 22 und Messung des Drucks in dem Zwischenraum 38 erfolgt eine Herbeiführung eines Testunterdrucks in dem Zwischenraum 38.

Infolge der so herbeigeführten Druckunterschiede in den Zwischenräumen 27, 38 wird der Wasserstofftank-Teilabschnitt 2 infolge des größeren Innendrucks nach außen beaufschlagt, während der Wasserstoffaußentank-Teilabschnitt 3 infolge des größeren Umgebungsdrucks im Bereich der Mantelfläche nach innen beaufschlagt wird. Dies entspricht der Beanspruchung in dem Betrieb der Wasserstofftankeinrichtung.

Eine Prüfung der Dichtigkeit des Wasserstofftank-Teilabschnitts 2 kann wie folgt erfolgen: Kommt es zu einem Durchtritt des Testfluids durch den Wasserstofftank-Teilabschnitt 2 von dem Zwischenraum 27 in den Zwischenraum 38, kann dies angesichts einer Druckänderung in dem Zwischenraum 27 und/oder dem Zwischenraum 38 detektiert werden, wobei das Druckgefälle mit der Zeit Aufschluss über die Dichtigkeit der Wandung des Wasserstofftank-Teilabschnitts 2 geben kann. Wird hingegen durch Regelung der Verbindung der Unterdruckquelle 22 mit dem Zwischenraum 38 und Regelung der Verbindung der Testfluidquelle 25 mit dem Zwischenraum 27 der Druck in den Zwischenräumen 27, 38 konstant gehalten, kann über die Messung der Volumenströme zwischen der Unterdruckquelle 22 und dem Zwischenraum 38 und/oder zwischen der Testfluidquelle 25 und dem Zwischenraum 27 eine Messung der Undichtigkeit des Wasserstofftank-Teilabschnitts 2 erfolgen.

Sofern auch ein Übertritt des Testfluids von dem Zwischenraum 27 zu dem Zwischenraum 38 über die Kontaktflächen 13, 16 trotz der Dichtelemente 14 erfolgt, kann auch eine Absaugung einer Dichtkammer 19 erfolgen, wobei dann der Volumenstrom der Absaugung Aufschluss über das Ausmaß der hier auftretenden Undichtigkeit im Kontaktbereich geben kann. Das Größe des abgesaugten Volumenstroms infolge der Undichtigkeit im Bereich der Dichtelemente 14 muss dann korrigierend berücksichtigt werden.

Ohne dass das erfindungsgemäße Grundprinzip verlassen wird, kann in der Wasserstofftank-Testeinrichtung 1 nicht lediglich die Wandung des Wasserstofftank-Teilabschnitts 2 und/oder des Wasserstoffaußentank-Teilabschnitts 3 einem Test unterzogen werden. Vielmehr kann der Wasserstofftank-Teilabschnitt 2 und/oder der Wasserstoffaußentank-Teilabschnitt 3 mit seiner Wandung und damit verbundenen Strukturbauteilen wie beispielsweise eine Isolierung, Verbindungselemente, Durchführungen, Crash-Absorbern, Anschlüssen, Leitungen u. ä. in der Wasserstofftank-Testeinrichtung 1 einem Test unterzogen werden.

Möglich ist, dass der Grundkörper 7 als zentrales Element sämtliche Komponenten der Wasserstofftank-Testeinrichtung 1 trägt. Der Grundkörper 7 kann dabei auch alle Systemdurchführungen (beispielsweise die Anschlüsse 21, 24 mit den zugeordneten Kanälen 37, 39), Ventileinrichtungen und/oder Messeinrichtungen enthalten. Des Weiteren kann auch ein Test mit Isolierungs- und Strukturelementen erfolgen, die zwischen dem Wasserstofftank und dem Wasserstoffaußentank (und entsprechend dann zwischen dem Wasserstofftank-Teilabschnitt 2 und dem Wasserstoffaußentank-Teilabschnitt 3) angeordnet sind.

Der Füllkörper 26 ist multifunktional, da dieser einerseits zur Reduzierung des mit dem Testfluid zu beaufschlagenden Innenraums des Wasserstofftank-Teilabschnitts 2 und andererseits der Kühlung des Testfluids dient.

Vorzugsweise handelt es sich bei dem Wasserstofftank-Teilabschnitt 2 und/oder dem Wasserstoffaußentank-Teilabschnitt 3 um CFK-Teilabschnitte oder -Bauteile.

Da der Test des Wasserstofftanks und des Wasserstoffaußentanks lediglich mittels eines Wasserstofftank-Teilabschnitts 2 und eines Wasserstoffaußentank-Teilabschnitts 3 erfolgt, die über Öffnungen 40a, 40b verfügen, ist das Einbringen der Leitungen und Messeinrichtungen in das Innere möglich und vereinfacht.

Möglich ist, dass Tests hinsichtlich der Dichtigkeit mit Verwendung des Füllkörpers 26 in der Wasserstofftank-Testeinrichtung 1 durchgeführt werden, während dann Berstversuche mit einem höheren Druck im Inneren des Wasserstofftank-Teilabschnitts 2 ohne den Füllkörper 26 ausgeführt werden können oder ein anderer Füllkörper Einsatz finden kann, der eine höhere Druckfestigkeit aufweist.

Die Wasserstofftank-Teilabschnitte 2 und Wasserstoffaußentank-Teilabschnitte 3 finden vorzugsweise Einsatz in Wasserstofftankeinrichtungen, die als leichte und mobile Druckbehälter mit großem Speichervolumen für flüssigen Wasserstoff in der Luftfahrt und für einen Wasserstofftransport von Interesse sind.

Als Kühlfluid wird vorzugsweise Stickstoff oder Helium verwendet.

Die Ausgestaltung einer Halterung 41, über die der Halterungsabschnitt 6b des Wasserstoffaußentank-Teilabschnitts 3 an dem Grundkörper 7 gehalten ist, ist in der schematischen Fig. 1 nicht detailliert. Die Anforderungen an diese Halterung 41 sind u. U. gegenüber der Halterung 15 unter Umständen reduziert, da der höhere Außendruck ohnehin den Wasserstoffaußentank-Teilabschnitt 3 an den Grundkörper 7 presst.

### BEZUGSZEICHENLISTE

- 1: Wasserstofftank-Testeinrichtung
- 2: Wasserstofftank-Teilabschnitt
- 3: Wasserstoffaußentank-Teilabschnitt
- 4a, 4b: Endkappe
- 5a, 5b: Hohlzylinderbereich
- 6a, 6b: Halterungsabschnitt
- 7: Grundkörper
- 8: Kontaktfläche
- 9: Dichtelement
- 10: Kontaktfläche
- 11: Fortsatz
- 12: Außenfläche
- 13: Kontaktfläche
- 14: Dichtelement
- 15: Halterung
- 16: Kontaktfläche
- 17: Keilelement
- 18: Schaubverbindung
- 19: Dichtkammer
- 20: Durchgangsausnehmung
- 21: Anschluss
- 22: Unterdruckquelle
- 23: Pumpe
- 24: Anschluss
- 25: Testfluidquelle
- 26: Füllkörper
- 27: Zwischenraum
- 28: Stirnplatte
- 29: Dämmkörper
- 30: Fortsatz
- 31: Dichtelement
- 32: Leitung
- 33: Kühleinrichtung
- 34: Sprühkühlung
- 35: Mündung
- 36: Innenfläche
- 37: Kanal
- 38: Zwischenraum
- 39: Kanal
- 40a, 40b: Öffnung
- 41: Halterung
- 42: Klemmvorrichtung

## Patentansprüche

1. Wasserstofftank-Testeinrichtung (1) zum Testen eines kryogenen Wasserstofftanks mit einem Grundkörper (7) und einer Halterung (15), über die ein Wasserstofftank-Teilabschnitt (2) im Bereich einer Öffnung (40) des Wasserstofftank-Teilabschnitts (2) unter Abdichtung an dem Grundkörper (7) gehalten werden kann, **gekennzeichnet durch** einen Füllkörper (26), der sich im Inneren eines an dem Grundkörper (7) gehaltenen Wasserstofftank-Teilabschnitts (2) erstreckt, wobei vorzugsweise der Grundkörper (7) einen Anschluss (24) für eine Testfluidquelle (25) aufweist, der fluidisch mit einem Zwischenraum (27) zwischen dem Wasserstofftank-Teilabschnitt (2) und dem Füllkörper (26) verbindbar ist.

2. Wasserstofftank-Testeinrichtung (1) nach Anspruch 1, **wobei** der Füllkörper (26) separat von dem Grundkörper (7) ausgebildet ist und an dem Grundkörper (7) befestigt ist und/oder zwischen dem Grundkörper (7) und dem Füllkörper (26) ein Dämmkörper (29) angeordnet ist.

3. Wasserstofftank-Testeinrichtung (1) nach einem der vorhergehenden Ansprüche, **wobei** der Grundkörper (7) mindestens
a) einen Anschluss (21; 24) und/oder
b) eine Messeinrichtung aufweist und/oder
c) eine Ventileinrichtung
aufweist.

4. Wasserstofftank-Testeinrichtung (1) nach einem der vorhergehenden Ansprüche, **wobei** der Füllkörper (26) eine Kühleinrichtung (33) aufweist, wobei vorzugsweise die Kühleinrichtung (33) als Sprühkühlung (34) ausgebildet ist.

5. Wasserstofftank-Testeinrichtung (1) nach Anspruch 4, **wobei** der Füllkörper (26) einen Fortsatz (30) aufweist, durch den sich mindestens eine elektrische und/oder fluidische Leitung (32) erstreckt, wobei sich der Fortsatz (30) mit der mindestens einen Leitung (32) durch den Grundkörper (7) erstreckt.

6. Wasserstofftank-Testeinrichtung (1) nach einem der vorhergehenden Ansprüche, **wobei** die Halterung (15) eine radiale Klemmvorrichtung (42) ist.

7. Wasserstofftank-Testeinrichtung (1) nach einem der vorhergehenden Ansprüche, **wobei** eine Messeinrichtung vorhanden ist, die einen Leckagestrom im Bereich der Halterung (15) misst.

8. Wasserstofftank-Testeinrichtung (1) nach einem der vorhergehenden Ansprüche, **wobei**
a) eine weitere Halterung (41) vorhanden ist und
b) an der weiteren Halterung (41) ein Wasserstoffaußentank-Teilabschnitt (3) unter Abdichtung gehalten werden kann, wobei der Wasserstofftank-Teilabschnitt (2) im Inneren des Wasserstoffaußentank-Teilabschnitts (3) angeordnet ist,
wobei vorzugsweise der Grundkörper (7) einen Anschluss (21) für eine Unterdruckquelle (22) aufweist, der fluidisch mit einem Zwischenraum (38) zwischen dem Wasserstofftank-Teilabschnitt (2) und dem Wasserstoffaußentank-Teilabschnitt (3) verbindbar ist.

9. Verfahren zum Testen eines kryogenen Wasserstofftanks mit einem abdichtenden Verbinden eines Wasserstofftank-Teilabschnitts (2) über eine Halterung (15) mit einem Grundkörpers (7) einer Wasserstofftank-Testeinrichtung (1), insbesondere einer Wasserstofftank-Testeinrichtung (1) nach einem der vorhergehenden Ansprüche, wobei ein Füllkörper (26) derart im Inneren des Wasserstofftank-Teilabschnitts (2) angeordnet wird, dass zwischen dem Füllkörper (26) und dem Wasserstofftank-Teilabschnitt (2) ein Zwischenraum (38) ausgebildet wird, wobei der Zwischenraum (38) mit einem Testfluid gefüllt und druckbeaufschlagt wird, wobei vorzugsweise vor dem Verbinden des Wasserstofftank-Teilabschnitts (2) über die Halterung (15) mit dem Grundkörper (7) der Wasserstofftank-Testeinrichtung (1) und dem Anordnen des Füllkörpers (26) im Inneren des Wasserstofftank-Teilabschnitts (2) der Füllkörper (26) an dem Grundkörper (7) montiert wird.

10. Verfahren nach Anspruch 9, **wobei** zwischen dem Grundkörper (7) und dem Füllkörper (26) ein Dämmkörper (29) angeordnet wird.

11. Verfahren nach Anspruch 9 oder 10, **wobei**
a) ein Fluid über einen Anschluss (21; 24) des Grundkörpers (7) übertragen wird und/oder
b) ein elektrisches Signal über einen Anschluss des Grundkörpers (7) übertragen wird und/oder
c) über eine Messeinrichtung des Grundkörpers (7) ein Messsignal erzeugt wird und/oder
d) eine Ventileinrichtung des Grundkörpers (7) eine fluidische Beaufschlagung steuert.

12. Verfahren nach einem der Ansprüche 9 bis 11, **wobei** der Füllkörper (26) und das den Füllkörper (26) umgebende Testfluid über eine Kühleinrichtung (33) des Füllkörpers (26) gekühlt wird, wobei vorzugsweise die Kühleinrichtung (33) eine Sprühkühlung (34) aufweist, bei der eine Innenfläche (36) des Füllkörpers (26) mit einem flüssigen Kühlmittel beaufschlagt wird und unter Verdampfung des Kühlmittels Wärme von dem Kühlmittel aufgenommen wird.

13. Verfahren nach einem der Ansprüche 9 bis 12, **wobei** sich mindestens eine elektrische und/oder fluidische Leitung (32) durch einen Fortsatz (30) des Füllkörpers (26) und mit dem Fortsatz (30) durch den Grundkörper (7) erstreckt.

14. Verfahren nach einem der Ansprüche 9 bis 13, **wobei** der Wasserstofftank-Teilabschnitt (2) mit der als Klemmvorrichtung (42) ausgebildeten Halterung (15) mit dem Grundkörper (7) radial verspannt wird.

15. Verfahren nach einem der Ansprüche 9 bis 14, **wobei** eine Messeinrichtung vorhanden ist, die einen Leckagestrom im Bereich der Halterung (15) misst.

16. Verfahren nach einem der Ansprüche 9 bis 15, mit einem abdichtenden Verbinden eines Wasserstoffaußentank-Teilabschnitts (3) über eine weitere Halterung (41) mit dem Grundkörper (7), wobei der Wasserstofftank-Teilabschnitt (2) derart im Inneren des Wasserstoffaußentank-Teilabschnitts (3) angeordnet wird, dass zwischen dem Wasserstofftank-Teilabschnitt (2) und dem Wasserstoffaußentank-Teilabschnitt (3) ein Zwischenraum (38) ausgebildet wird, wobei der Zwischenraum (38) mit einer Unterdruckquelle (22) verbunden wird.

17. Verfahren nach einem der Ansprüche 9 bis 16, **wobei**
a) für die Verbindung des Wasserstofftank-Teilabschnitts (2) über die Halterung (15) ein Halterungsabschnitt (6a) des Wasserstofftank-Teilabschnitts (2) verwendet wird, über den für die Bildung des Wasserstofftanks der Wasserstofftank-Teilabschnitt (2) mit einem anderen Teilabschnitt des Wasserstofftanks verbunden wird, und/oder
b) für die Verbindung des Wasserstoffaußentank-Teilabschnitts (3) über die weitere Halterung (41) ein Halterungsabschnitt (6b) des Wasserstoffaußentank-Teilabschnitts (3) verwendet wird, über den für die Bildung des Wasserstoffaußentanks der Wasserstoffaußentank-Teilabschnitt (3) mit einem anderen Teilabschnitt des Wasserstoffaußentanks verbunden wird, und/oder
c) nach der Durchführung des Tests ein Halterungsabschnitt (6b) des Wasserstoffaußentank-Teilabschnitts (3), im Bereich dessen eine Verbindung mit der weiteren Halterung (41) erfolgt ist, entfernt wird, und danach ein Halterungsabschnitt (6a) des Wasserstofftank-Teilabschnitts (2), im Bereich dessen eine Verbindung über die Halterung (15) erfolgt ist, entfernt wird.
